**Europäisches Patentamt**

**European Patent Office**

**Office européen des brevets**

(11) Veröffentlichungsnummer: **0 074 578**
**B1**

(12) # EUROPÄISCHE PATENTSCHRIFT

(45) Veröffentlichungstag der Patentschrift:
**27.12.84**

(51) Int. Cl.³: **A 01 G 3/02**

(21) Anmeldenummer: **82108123.9**

(22) Anmeldetag: **02.09.82**

(54) **Gartenschere mit Hebelkraftunterstützung.**

(30) Priorität: **11.09.81 DE 3136119**

(43) Veröffentlichungstag der Anmeldung:
**23.03.83 Patentblatt 83/12**

(45) Bekanntmachung des Hinweises auf die Patenterteilung:
**27.12.84 Patentblatt 84/52**

(84) Benannte Vertragsstaaten:
**AT BE CH FR GB IT LI NL SE**

(56) Entgegenhaltungen:
**DE - B - 1 063 848**
**GB - A - 590 646**
**US - A - 2 528 816**

(73) Patentinhaber: **Wolf-Geräte GmbH, Gregor-Wolf-Strasse Postfach 860 und 880, D-5240 Betzdorf/Sieg (DE)**

(72) Erfinder: **Munkes, Günter, Am Schlaufenglan 38, D-6690 St. Wendel 1 (DE)**
Erfinder: **Suck, Bruno, Bleiderdingen, D-6589 Hoppstetten-Beiersbach (DE)**

(74) Vertreter: **Koch, Günther, Dipl.-Ing. et al, Kaufingerstrasse 8, D-8000 München 2 (DE)**

ACTORUM AG

## Beschreibung

Die Erfindung bezieht sich auf eine Gartenschere mit ziehendem Schnitt und mit Hebelkraftunterstützung, mit einem ersten Schneidblatt, das mit einem ersten Griff starr verbunden ist, mit einem zweiten Schneidblatt, das über einen Langlochschlitz an einem Schiebegelenkzapfen des ersten Griffs angelenkt ist, mit einem zweiten Griff, der über einen gegenüber dem Schiebegelenkzapfen seitlich versetzten Drehgelenkzapfen am ersten Griff angelenkt ist, und mit einem Zwischenhebel, der einerseits an dem zweiten Schneidblatt über einen ersten Zapfen und andererseits an dem zweiten Griffstück über einen zweiten Zapfen angelenkt ist. Eine solche Gartenschere ist aus der US-PS Nr. 2528816 bekannt. Hierbei dient der Zwischenhebel, dessen Längsbewegung entweder durch einen Lenker oder durch Führungsstifte am zweiten Griff gesteuert wird, lediglich der Kraftübertragung vom zweiten Griff auf das zweite Schneidblatt, welches hierdurch auf einer bestimmten Bewegungsbahn gegenüber dem ersten Schneidblatt geführt wird. Die Kraftübertragung ist jedoch im wesentlich die gleiche wie bei Scheren, bei denen der zweite Griffhebel unmittelbar an dem zweiten Schneidblatt angelenkt ist, wie dies beispielsweise aus der GB-PS Nr. 590646 bekannt ist.

In beiden Fällen ergibt sich gegenüber einer gewöhnlichen Schere, bei der die beiden Griffe nur über ein einziges Drehgelenk verbunden sind, eine verbesserte Arbeitsweise mit ziehendem Schnitt und verstärkter Hebelübersetzung.

Der Erfindung liegt die Aufgabe zugrunde, eine solche Gartenschere weiter derart zu verbessern, dass mit noch geringerem Kraftaufwand in ergonometrisch günstiger Weise gearbeitet werden kann, wobei eine erhöhte Schneidkraft erzielt wird.

Gelöst wird die gestellte Aufgabe dadurch, dass der Zwischenhebel zwischen dem ersten und dem zweiten Zapfen mit einem weiteren Drehzapfen an dem das erste Schneidblatt und den ersten Griff bildenden Hebel angelenkt ist, und dass das Gelenk zwischen dem zweiten Griff und dem Zwischenhebel als Schiebegelenk ausgebildet ist.

Durch die erfindungsgemäss vorgesehene Doppelhebelanordnung wird erreicht, dass ein sauber ziehender Schnitt mit hoher Schneidkraft durch einen verlängerten Schliessweg der Griffe erreicht wird. Die erfindungsgemässe Gartenschere zeichnet sich damit durch eine verbesserte Funktion bei bequemer Handhabung gegenüber dem Stande der Technik aus, weil die Kraftübertragung in besonders günstiger Weise erfolgt und kraftverzehrende Reibungseingriffe weitgehend verhindert werden.

Weitere zweckmässige Ausgestaltungen der Erfindung ergeben sich aus den Unteransprüchen.

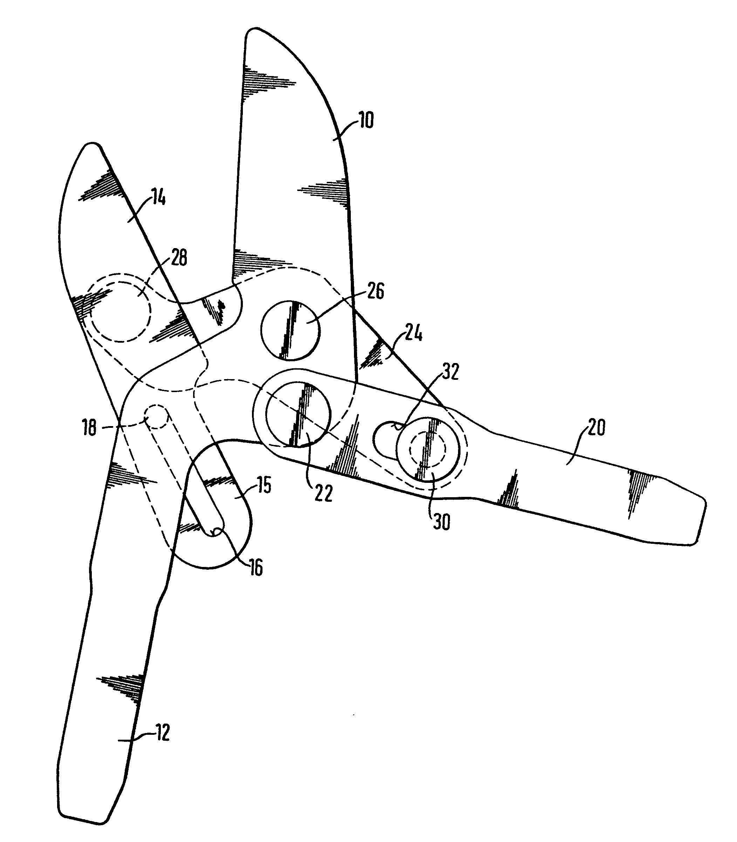

Nachstehend wird ein Ausführungsbeispiel der Erfindung anhand der Zeichnung beschrieben. Die einzige Figur der Zeichnung zeigt eine Ansicht einer erfindungsgemäss ausgebildeten Gartenschere in geöffneter Stellung.

Ein erstes Schneidblatt 10 der Schere ist starr mit einem ersten Handgriff 12 verbunden. Das zweite als Amboss ausgebildete und mit dem ersten Schneidblatt 10 zusammenwirkende Schneidblatt 14 weist in einem Fortsatz 15 einen Langlochschlitz 16 auf, mit welchem es auf einem Schiebegelenkzapfen 18 verschiebbar und verschwenkbar gelagert ist, der im ersten Griff 12 eingesetzt ist.

Der zweite Griff 20 ist über einen Drehgelenkzapfen 22 mit dem ersten Griff gelenkig verbunden. Die Achsen von Schiebegelenkzapfen 18 und Drehgelenkzapfen 22 liegen im seitlichen Abstand zueinander, zu beiden Seiten einer Linie, die durch den Fortsatz der Schneidkante des ersten Schneidblattes 10 definiert ist.

Zwischen dem zweiten Schneidblatt 14 und dem zweiten, als einarmiger Hebel ausgebildeten Griff 20 ist ein doppelarmiger Zwischenhebel 24 angeordnet. Dieser im allgemeinen S-förmig ausgebildete Zwischenhebel 24 ist in seinem mittleren Abschnitt über einen Drehzapfen 26 am ersten Griff 12 angelenkt. Die Achse dieses Drehzapfens 26 liegt gegenüber der Achse des Drehgelenkzapfens 22 nach der Spitze des ersten Schneidblattes 10 hin versetzt. Die Achsen von 18, 26 und 22 liegen auf den Ecken eines Dreiecks, welches bei 22 fast einen rechten Winkel bildet, wobei die kürzere Hypotenuse zwischen den Achsen von 22 und 26 und die längere Hypotenuse zwischen den Achsen von 22 und 18 liegt.

Der Zwischenhebel 24 ist über einer ersten Zapfen 28 am zweiten Schneidblatt 14 angelenkt. Ein zweiter von dem anderen Hebelarm des Zwischenhebels 24 getragener Zapfen 30 greift in ein Langloch 32 des zweiten Griffes 20 ein, so dass dieser zweite Griff als einarmiger Hebel wirkt, der über dem Drehgelenkzapfen 22 im ersten Griff 12 angelenkt ist und über den Zwischenhebel 24 auf das zweite Schneidblatt 14 einwirkt. Auf diese Weise wird eine doppelte Hebelübersetzung erreicht, die bei einem verlängerten Weg der Griffe gegeneinander eine erhöhte Schneidkraftwirkung mit ziehendem Schnitt ergibt.

Wenn aus der aus der Zeichnung ersichtlichen Öffnungsstellung die Griffe 12 und 20 aufeinander zu bewegt werden, dann verschwenkt der zweite Griff 20 über dem zweiten Zapfen 30 den Zwischenhebel 24 um den Drehzapfen 26 und versetzt das zweite Schneidblatt 14 in eine gleichzeitige Schwenkbewegung um den Schiebegelenkzapfen 18 und in eine translatorische Bewegung, die durch die Langlochschlitzführung 16 bedingt ist. Auf diese Weise werden die beiden Schneidblätter 10 und 14 nicht nur gegeneinander verschwenkt, sondern auch noch mit ihren Schneidkanten translatorisch zueinander bewegt, was den ziehenden Schnitt zur Folge hat, welcher eine besonders günstige Schneidwirkung ergibt. In geschlossener Stellung stehen sich die Schneidkanten der beiden Schneidblätter und die Schneidspitzen gegenüber.

Die in der Zeichnung dargestellte Schere ist insbesondere für gärtnerische Zwecke und hier insbesondere als Astschere geeignet, kann jedoch auch bei entsprechender Gestaltung der Schneidblätter für andere Zwecke, beispielsweise als Drahtschere, Knochenschere oder Metallschere ausgebildet sein.

Durch die zeichnerisch dargestellte und beschriebene Ausbildung und Anordnung der Gelenke und der Griffe wird eine ergonometrisch günstige Arbeitsweise gewährleistet.

## Patentansprüche

1. Gartenschere mit ziehendem Schnitt und mit Hebelkraftunterstützung, mit einem ersten Schneidblatt (10), das mit einem ersten Griff (12) starr verbunden ist, mit einem zweiten Schneidblatt (14), das über einen Langlochschlitz (16) an einem Schiebegelenkzapfen (18) des ersten Griffs (12) angelenkt ist, mit einem zweiten Griff (20), der über einen gegenüber dem Schiebegelenkzapfen (18) seitlich versetzten Drehgelenkzapfen (22) am ersten Griff angelenkt ist, und mit einem Zwischenhebel (24), der einerseits an dem zweiten Schneidblatt (14) über einen ersten Zapfen (28) und anderseits an dem zweiten Griffstück (12) über einen zweiten Zapfen (30) angelenkt ist, dadurch gekennzeichnet, dass der Zwischenhebel (24) zwischen dem ersten und dem zweiten Zapfen (28, 30) mit einem weiteren Drehzapfen (26) an dem das erste Schneidblatt (10) und den ersten Griff (12) bildenden Hebel angelenkt ist, und dass das Gelenk zwischen dem zweiten Griff (20) und dem Zwischenhebel (24) als Schiebegelenk (30, 32) ausgebildet ist.

2. Gartenschere nach Anspruch 1, dadurch gekennzeichnet, dass der Zwischenhebel (24) allgemein S-förmig ausgebildet ist, wobei der weitere Drehzapfen (26) etwa in der Mitte liegt und am Übergang von erstem Griff (12) und erstem Schneidblatt (10) angreift.

3. Gartenschere nach den Ansprüchen 1 und 2, dadurch gekennzeichnet, dass die gegenüber dem ersten Griff festen Achsen von Schiebegelenkzapfen (18), Drehzapfen (26) und Drehgelenkzapfen (22) auf den Eckpunkten eines etwa rechtwinkligen Dreiecks liegen, und dass der Scheitel des rechten Winkels mit der Achse des Drehgelenkzapfens (22) zusammenfällt.

## Claims

1. Garden shears for executing a sliding cut with lever force assistance, the shears comprising a first cutting blade (10) which is rigidly connected with a first handle (12), a second cutting blade (14) which is pivotably connected *via* an elongated slot (16) with a sliding hinge pin (18) of the first handle (12), a second handle (20) which is pivotably connected to the first handle *via* a hinge pin (22) which is laterally displaced relative to the sliding joint pin (18), and an intermediate lever (24) which is connected at one end to the second cutting blade (14) *via* a first pin (28) and at the other end to the second handle (12) *via* a second pin (30), characterized in that the intermediate lever (24) is pivotably connected between the first and second pins (28, 30) to the lever which forms the first cutting blade (10) and the first handle (12) by a further pin (26); and in that the hinge between the second handle (20) and the intermediate lever (24) is constructed as a sliding hinge (30, 32).

2. Garden shears in accordance with Claim 1, characterized in that the intermediate lever (24) is generally S-shaped, with the further pin (26) lying approximately in the middle and acting at the transition from the first handle (12) to the first cutting blade (10).

3. Garden shears in accordance with the Claims 1 and 2, characterized in that the axes of the sliding hinge pin (18), of the further pin (26) and of the hinge pin (22), which are fixed relative to the first grip, lie at the corner points of an approximately right-angled triangle; and in that the apex of the right angle coincides with the axis of the hinge pin (22).

## Revendications

1. Sécateur à coupe par pression progressive, renforcé par un effort de levier, qui comporte une première lame de coupe (10) reliée rigidement à une première poignée (12), une seconde lame de coupe (14) articulée par une fente sous forme de boutonnière (16) à un axe d'articulation à coulissement (18) de la première poignée (12), une seconde poignée (20) articulée à la première poignée par un pivot d'articulation (22) décalé latéralement par rapport à l'axe d'articulation à coulissement (18), et un levier intermédiaire (24) articulé, d'une part, à la seconde lame de coupe (14) par un premier pivot (28) et, d'autre part, à la seconde poignée (12) par un second pivot (30), le sécateur étant caractérisé en ce que le levier intermédiaire (24) est articulé, entre le premier et le second pivot (28, 30), par un autre pivot (26) au levier formant la première lame de coupe (10) et la première poignée (12), et en ce que l'articulation entre la seconde poignée (20) et le levier intermédiaire (24) est prévue sous la forme d'une articulation à coulissement (30, 32).

2. Sécateur suivant la revendication 1, caractérisé en ce que le levier intermédiaire (24) se présente dans l'ensemble en forme de S, le pivot supplémentaire (26) se trouvant en son milieu et agissant à l'endroit de transition entre la première poignée (12) et la première lame de coupe (10).

3. Sécateur suivant les revendications 1 et 2, caractérisé en ce que les axes géométriques fixes, par rapport à la première poignée, de l'axe d'articulation à coulissement (18), du pivot (26) et du pivot d'articulation (22) se trouvent aux points d'angles d'un triangle approximativement rectangle et en ce que le sommet de l'angle droit coïncide avec l'axe géométrique du pivot d'articulation (22).